# EUROPEAN PATENT APPLICATION

(11) **EP 4 451 730 A1**
(43) Date of publication of application: **23.10.2024**
(21) Application number: 21967516.2
(22) Date of filing: 13.12.2021
(51) Int. Cl.: H04W 24/08, H04W 56/00

(54) **MEASUREMENT METHOD AND DEVICE, USER EQUIPMENT, NETWORK SIDE EQUIPMENT, AND STORAGE MEDIUM**

(71) Applicant: Beijing Xiaomi Mobile Software Co., Ltd., Beijing 100085 (CN)
(72) Inventor: TAO, Xuhua, Beijing 100085 (CN)
(74) Representative: Gunzelmann, Rainer
(86) International application number: PCT/CN2021/137607
(87) International publication number: WO 2023/108374

(57) **Abstract**

A measurement method and device, user equipment, network side equipment and a storage medium, which can solve the problem in NTN systems in which the measurement cannot be carried out for different adjacent cells to be measured on the same measurement carrier due to differences in transmission delays of satellites corresponding thereto. The method comprises: obtaining at least one synchronization signal block measurement timing configuration (SMTC) configuration corresponding to each measurement carrier and sent by network side equipment; determining a correspondence between each cell to be measured on the each measurement carrier and the at least one SMTC configuration; and in an active state of the SMTC configuration, measuring a cell corresponding to the SMTC configuration.

## Description

### TECHNICAL FIELD

This disclosure relates to the field of communication technology, particularly to a measurement method and device, a user equipment, a network side device, and a storage medium.

### BACKGROUND

In a Non-Terrestrial Networks (NTN) system, a User Equipment (UE) typically needs to perform neighbor cell measurement.

In related art, a method for the UE to measure a neighbor cell includes, for example, configuring a same Synchronization Signal Block Measurement Timing Configuration (SMTC) for neighbor cells to be measured on a same measurement carrier, and measuring different neighbor cells to be measured on the same carrier based on the configured SMTC.

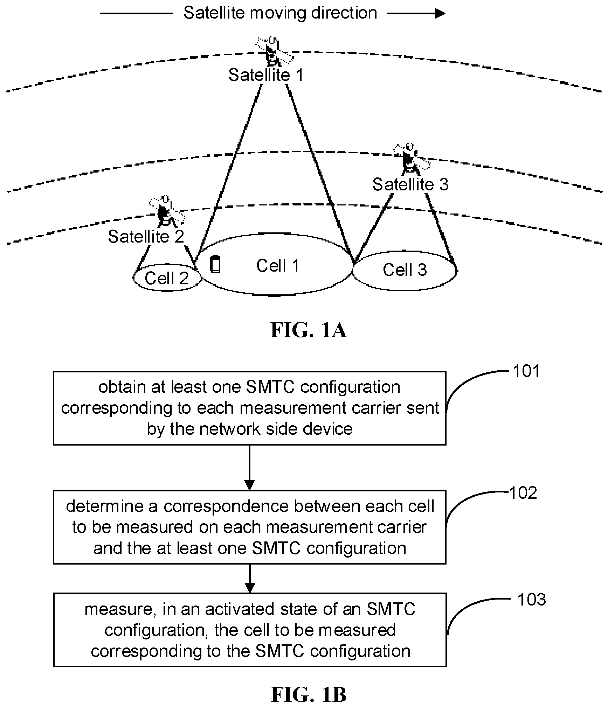

However, in the NTN system, orbits of satellites corresponding to different neighbor cells to be measured may be different, as illustrated in FIG. 1A. The neighbor cell 1 to be measured (i.e. the cell1 in the FIG. 1A), the neighbor cell 2 to be measured (i.e. the cell2 in the FIG. 1A), and the neighbor cell 3 to be measured (i.e. the cell3 in the FIG. 1A) respectively correspond to the satellite 1, the satellite 2, and the satellite 3 on different orbits. A difference between transmission delays of satellites on different orbits is relatively large, which will lead to a relatively large transmission delay difference for different neighbor cells to be measured in receiving a reference signal. That is to say, different neighbor cells to be measured may not receive the reference signal at a same time point. Therefore, if different neighbor cells to be measured on the same carrier are measured simultaneously, there may be a situation where "some neighbor cells to be measured cannot be measured since the these neighbor cells to be measured do not receive any reference signal", that is, there is a problem that "different neighbor cells to be measured on the same measurement carrier cannot be measured due to different transmission delay differences of corresponding satellites".

### SUMMARY

The disclosure provides measurement methods and devices, a user equipment (UE), a network side device, and a storage medium, to solve a problem that "in a Non-Terrestrial Networks (NTN) system, different neighbor cells to be measured on a same measurement carrier cannot be measured due to different transmission delay differences of corresponding satellites".

Embodiments of one aspect of the disclosure provide a measurement method, performed by a UE. The method includes:
obtaining at least one Synchronization Signal Block Measurement Timing Configuration (SMTC) configuration corresponding to each measurement carrier sent by a network side device;
determining a correspondence between each cell to be measured on each measurement carrier and the at least one SMTC configuration; and
measuring the cell to be measured corresponding to the SMTC configuration in an activated state of the SMTC configuration.

Embodiments of another aspect of the disclosure provide a measurement method performed by a network side device. The device includes:
sending at least one Synchronization Signal Block Measurement Timing Configuration (SMTC) configuration corresponding to each measurement carrier to a user equipment (UE); and
sending a correspondence between each cell to be measured on each measurement carrier and the at least one SMTC configuration to the UE.

Embodiments of still another aspect of the disclosure provide a measurement device, configured in a user equipment (UE). The device includes:
an acquisition module configured to obtain at least one Synchronization Signal Block Measurement Timing Configuration (SMTC) configuration corresponding to each measurement carrier sent by a network side device;
a determination module configured to determine a correspondence between each cell to be measured on each measurement carrier and the at least one SMTC configuration; and
a measurement module configured to measure the cell to be measured corresponding to the SMTC configuration in an activated state of the SMTC configuration.

Embodiments of yet another aspect of the disclosure provide a measurement device, configured in a network side device. The device includes:
a first transmission module, configured to send at least one Synchronization Signal Block Measurement Timing Configuration (SMTC) configuration corresponding to each measurement carrier to a user equipment (UE); and
a second transmission module, configured to send a correspondence between each cell to be measured on each measurement carrier and the at least one SMTC configuration to the UE.

Embodiments of yet another aspect of the disclosure provide a communication device. The communication device includes a processor and a memory. The memory has a computer program stored therein. The processor executes the computer program stored in the memory to enable the device to perform the methods according to embodiments of a first aspect.

Embodiments of yet another aspect of the disclosure provide a communication device. The communication device includes a processor and a memory. The memory has a computer program stored therein. The processor executes the computer program stored in the memory to enable the device to perform the method according to embodiments of a second aspect.

Embodiments of yet another aspect of the disclosure provide a communication device. The communication device includes a processor and an interface circuit.

The interface circuit is configured to receive code instructions and transmit the code instructions to the processor.

The processor is configured to run the code instructions to perform the method according to embodiments of the first aspect.

Embodiments of yet another aspect of the disclosure provide a communication device. The communication device includes a processor and an interface circuit.

The interface circuit is configured to receive code instructions and transmit the code instructions to the processor.

The processor is configured to run the code instructions to perform the method according to embodiments of the second aspect.

Embodiments of yet another aspect of the disclosure provide a computer-readable storage medium having instructions stored thereon. When the instructions are executed, the method according to embodiments of the first aspect is performed.

Embodiments of yet another aspect of the disclosure provide a computer-readable storage medium having instructions stored thereon. When the instructions are executed, the method according to embodiments of the second aspect is performed.

With the beam measurement methods and devices, the user equipment, the base station, and the storage medium according to embodiments of the disclosure, the UE may obtain the at least one SMTC configuration corresponding to each measurement carrier sent by the network side device, determine the correspondence between each cell to be measured on each measurement carrier and the at least one SMTC configuration, and measure, in the activated state of the SMTC configuration, the cell to be measured corresponding to the SMTC configuration. It may be seen that in embodiments of the disclosure, respective SMTC configurations may be configured for different cells to be measured on the same measurement carrier, and different SMTC configurations may be activated at different time points, such that the measurement of different cells to be measured at different time points is achieved. Based on this, when the transmission delay differences of satellites corresponding to different cells to be measured are different, each cell to be measured may be activated at the corresponding time point based on the transmission delay difference of each satellite, thereby achieving successful measurement of each cell to be measured and solving the problem that "in the NTN system, different neighbor cells to be measured on the same measurement carrier cannot be measured due to different transmission delay differences of corresponding satellites".

### BRIEF DESCRIPTION OF THE DRAWINGS

Above-mentioned and/or additional aspects and advantages of the disclosure will become apparent and easy to understand from the following description of embodiments in conjunction with accompanying drawings.
FIG. 1A is a schematic diagram containing cells and satellites according to an embodiment of the disclosure.
FIG. 1B is a flowchart illustrating a measurement method according to an embodiment of the disclosure.
FIG. 2A is a flowchart illustrating a measurement method according to another embodiment of the disclosure.
FIG. 2B is a flowchart illustrating a measurement method according to another embodiment of the disclosure.
FIG. 3 is a flowchart illustrating a measurement method according to still another embodiment of the disclosure.
FIG. 4 is a flowchart illustrating a measurement method according to yet another embodiment of the disclosure.
FIG. 5 is a flowchart illustrating a measurement method according to yet another embodiment of the disclosure.
FIG. 6 is a flowchart illustrating a measurement method according to yet another embodiment of the disclosure.
FIG. 7A is a flowchart illustrating a measurement method according to yet another embodiment of the disclosure.
FIG. 7B is a flowchart illustrating a measurement method according to yet another embodiment of the disclosure.
FIG. 8 is a flowchart illustrating a measurement method according to yet another embodiment of the disclosure.
FIG. 9 is a flowchart illustrating a measurement method according to yet another embodiment of the disclosure.
FIG. 10 is a flowchart illustrating a measurement method according to yet another embodiment of the disclosure.
FIG. 11 is a schematic diagram illustrating a measurement device according to yet another embodiment of the disclosure.
FIG. 12 is a schematic diagram illustrating a measurement device according to yet another embodiment of the disclosure.
FIG. 13 is a block diagram illustrating a user equipment (UE) according to yet another embodiment of the disclosure.
FIG. 14 is a block diagram illustrating a network side device according to yet another embodiment of the disclosure.

### DETAILED DESCRIPTION

Embodiments of the disclosure will be described in detail below, and examples of embodiments are shown in accompanying drawings. In the description with reference to the drawings, unless otherwise indicated, the same numbers in different drawings indicate the same or similar elements. Embodiments described below do not represent all embodiments consistent with the disclosure. Instead, they are only examples of devices and methods consistent with some aspects of the disclosure as detailed in the attached claims.

Terms used in embodiments of the disclosure are solely for a purpose of describing specific embodiments and are not intended to limit embodiments of the disclosure. The singular forms "a/an" and "the" used in embodiments of the disclosure and attached claims are also intended to include plural forms, unless clearly indicated otherwise in the context. It is understandable that the term "and/or" used in the disclosure refers to and includes any or all possible combinations of one or more related listed items.

It is understandable that although various information may be described using terms such as first, second, third, etc. in embodiments of the disclosure, such information should not be limited to these terms. These terms are only used to distinguish information of the same type from each other. For example, without departing from the scope of embodiments of the disclosure, first information may also be referred to as second information, and similarly, second information may also be referred to as first information. Depending on the context, words "if' and "as if" used here can be interpreted as "when" or "while" or "in response to determining".

The following provides a detailed description of measurement methods and devices, a user equipment (UE), a network side device, and a storage medium according to embodiments of the disclosure with reference to the accompanying drawings.

FIG. 1B is a flowchart illustrating a measurement method according to embodiments of the disclosure. The method is performed by a UE. As illustrated in FIG. 1B, the measurement method may include the following.

At step 101, at least one Synchronization Signal Block Measurement Timing Configuration (SMTC) configuration corresponding to each measurement carrier sent by the network side device is obtained.

In one embodiment of the disclosure, the UE may be a device that provides voice and/or data connectivity to a user. The UE may communicate with one or more core networks through a Radio Access Network (RAN), and the UE may be an internet of things terminal such as a sensor device, a mobile phone (or called as a "cellular" phone), or a computer including the internet of things terminal, for example, a fixed, a portable, a pocket, a handheld, a computer built-in, or a vehicle-mounted device, for example, a station (STA), a subscriber unit, a subscriber station, a mobile station, a mobile, a remote station, an access point, a remote terminal, an access terminal, a user terminal, or a user agent. Or, the UE may be a device of an unmanned aerial vehicle. Or, the UE may be a vehicle-mounted device, such as a trip computer with a wireless communication function, or a wireless terminal externally connected to the trip computer. Or, the UE may be a roadside device, such as a street light, a signal light, or other roadside device each with the wireless communication function.

In one embodiment of the disclosure, the SMTC configuration may include: {offset (i.e., an offset value of a receiving window), period (i.e., a period of the receiving window), and duration (i.e., a duration of the receiving window)}. The offset of the receiving window contained in the SMTC configuration is configured to indicate an offset of the receiving window relative to a starting position, the period contained in the SMTC configuration is configured to indicate a period when the receiving window appears, and the duration of the receiving window contained in the SMTC configuration is configured to indicate a size of the receiving window. The above-mentioned "receiving window" is mainly used for cell measurement.

Furthermore, in one embodiment of the disclosure, the number of SMTC configurations corresponding to different measurement carriers may be the same. In another embodiment of the disclosure, the number of SMTC configurations corresponding to different measurement carriers may be different.

For example, in one embodiment of the disclosure, the measurement carrier CC1 may correspond to SMTC#1, SMTC#2, SMTC#3 and SMTC#4, while the measurement carrier CC2 may correspond to SMTC#1 and SMTC#2.

At step 102, a correspondence between each cell to be measured on each measurement carrier and the at least one SMTC configuration is determined.

In one embodiment of the disclosure, there is a one-to-one correspondence between each of the at least one SMTC configuration corresponding to a measurement carrier and each cell to be measured on that measurement carrier. Furthermore, in one embodiment of the disclosure, the SMTC configurations corresponding to different cells to be measured may be the same. In another embodiment of the disclosure, the SMTC configurations corresponding to different cells to be measured may be different.

For example, in one embodiment of the disclosure, it is assumed that on the measurement carrier CC2, there is a cell 1 to be measured and a cell 2 to be measured. The cell 1 to be measured may correspond to SMTC#1 {Offset1, Period1, Duration1}, and the cell 2 to be measured may correspond to SMTC#2 {Offset2, Period2, Duration2}. Values of the Offset1 and the Offset2 may be the same or different, values of the Period1 and the Period2 may be the same or different, and values of the Duration1 and the Duration2 may be the same or different.

Furthermore, in one embodiment of the disclosure, determining the correspondence between each cell to be measured on each measurement carrier and the at least one SMTC configuration may include at least one of the following:
determining the correspondence between each cell to be measured on each measurement carrier and the at least one SMTC configuration based on an indication from the network side device; or
determining the correspondence between each cell to be measured on each measurement carrier and the at least one SMTC configuration based on a protocol.

At step 103, a cell to be measured corresponding to an SMTC configuration is measured in an activated state of the SMTC configuration.

In one embodiment of the disclosure, the UE will first determine an activated state or a deactivated state of the SMTC configuration.

In one embodiment of the disclosure, determining by the UE the activated state or the deactivated state of the SMTC configuration may include:
determining the activated state or the deactivated state of the SMTC configuration based on a dynamic indication from the network side device; and/or,
determining, by the UE, the activated state or the deactivated state of the SMTC configuration based on a timer corresponding to the SMTC configuration, in which the timer is configured by the network side device for the SMTC configuration.

The specific method of determining, by the UE, the activated state or the deactivated state of the SMTC configuration based on the dynamic indication from the network side device or based on the timer will be introduced in subsequent embodiments.

As can be seen from the above content, in one embodiment of the disclosure, the network side device determines the activated state for the SMTC configuration and notifies this to the UE. That is to say, the network side device determines when to activate the SMTC configuration and when not to activate the SMTC configuration. In one embodiment of the disclosure, the network side device may determine, mainly based on whether the UE is able to successfully obtain a reference signal of the cell to be measured corresponding to the SMTC configuration, when to activate the SMTC configuration and when to not activate the SMTC configuration.

Specifically, in one embodiment of the disclosure, the network side device may determine, based on relevant information of a respective satellite (such as ephemeris information of the satellite or orbit information of the satellite) corresponding to each cell to be measured, the time when the reference signal may be successfully received within each cell to be measured and the time when the reference signal cannot be received successfully within each cell to be measured. Based on this, upon the network side device determines that the reference signal may be successfully received within a certain cell to be measured, which indicates that the UE may successfully obtain a measurement signal of the cell to be measured (i.e., the UE may measure the cell to be measured), the network side device may activate the SMTC configuration corresponding to the cell to be measured (i.e., set the SMTC configuration to be an activated state), so that the UE may measure the cell to be measured based on the SMTC configuration. Upon the network side device determines that any reference signal cannot be successfully received within a certain cell to be measured, which indicates that the UE cannot obtain the measurement signal of the cell to be measured (i.e., the UE cannot measure the cell to be measured), the network side device may deactivate the SMTC configuration corresponding to the cell to be measured (i.e., set the SMTC configuration to be a deactivated state), such that the UE does not measure the cell to be measured.

Further, after determining whether the SMTC configuration is in the activated state or the deactivated state, in one embodiment of the disclosure, if the SMTC configuration is in the activated state, which indicates that the measurement signal may be successfully received within the cell to be measured corresponding to the SMTC configuration, then the UE may measure, based on the SMTC configuration, the measurement signal of the cell to be measured corresponding to the SMTC configuration. In addition, in one embodiment of the disclosure, if the SMTC configuration is in the deactivated state, which indicates that the measurement signal cannot be successfully received within the cell to be measured corresponding to the SMTC configuration, then the UE does not measure the measurement signal of the cell to be measured corresponding to the SMTC configuration.

Therefore, in one embodiment of the disclosure, only when the UE is able to successfully receive the reference signal of a cell to be measured corresponding to a certain SMTC configuration, the SMTC configuration is activated, so that the UE may measure, based on the SMTC configuration, the reference signal of the corresponding cell to be measured. Therefore, this ensures that the UE may successfully measure any cell to be measured in the NTN system.

Furthermore, in one embodiment of the disclosure, only partial of the at least one SMTC configuration corresponding to the measurement carrier in the step 101 above may be in the correspondence with the cell(s) to be measured, while the remaining SMTC configurations may not correspond to any cell to be measured (i.e., the remaining SMTC configurations are not used for measuring the cells). In another embodiment of the disclosure, each of the at least one SMTC configuration corresponding to the measurement carrier in the step 101 may be in the correspondence with a respective cell to be measured. Based on this, it is noteworthy that in one embodiment of the disclosure, only an SMTC configuration corresponding to a cell to be measured may have the activated state or the deactivated state, while an SMTC configuration that does not correspond to any cell to be measured does not have the activated state since such an SMTC configuration is not used for performing cell measurement. The network side device and/or the UE only need to determine the activated state or the deactivated state for the SMTC configuration(s) corresponding to the cell(s) to be measured, without the need of determining the activated state or the deactivated state for the SMTC configuration that does not correspond to any cell to be measured.

With the beam measurement method according to embodiments of the disclosure, the UE may obtain the at least one SMTC configuration corresponding to each measurement carrier sent by the network side device, determine the correspondence between each cell to be measured on each measurement carrier and the at least one SMTC configuration, and measure, in the activated state of the SMTC configuration, the cell to be measured corresponding to the SMTC configuration. It may be seen that in embodiments of the disclosure, different cells to be measured on the same measurement carrier may be configured with respective SMTC configurations, and different SMTC configurations may be activated at different time points to achieve the measurement of different cells to be measured at different time points. Based on this, when transmission delay differences of satellites corresponding to different cells to be measured are different, each cell to be measured may be activated at the corresponding time point based on the transmission delay difference of each satellite, thereby achieving successful measurement of each cell to be measured and solving the problem that "in the NTN system, different neighbor cells to be measured on the same measurement carrier cannot be measured due to different transmission delay differences of corresponding satellites".

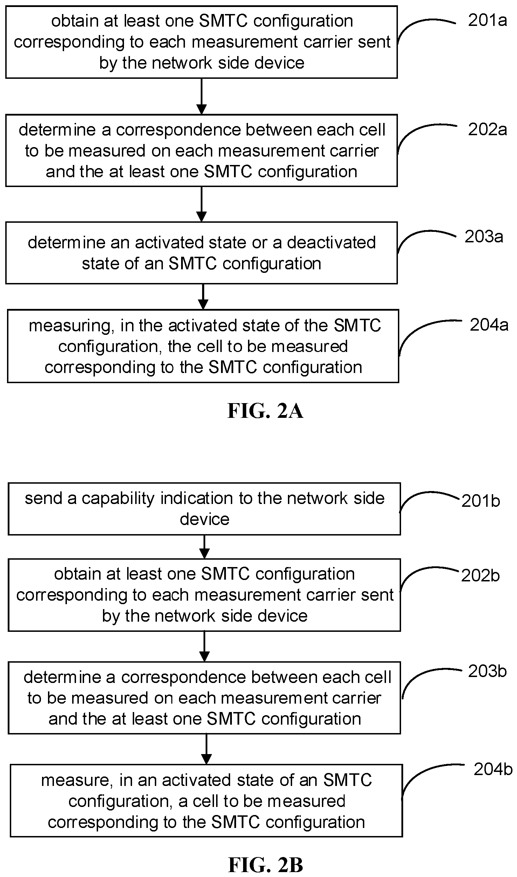

FIG. 2A is a flowchart illustrating a measurement method according to embodiments of the disclosure. The method is performed by the UE. As illustrated in FIG. 2A, the measurement method may include the following.

At step 201a, at least one SMTC configuration corresponding to each measurement carrier sent by the network side device is received.

At step 202a, a correspondence between each cell to be measured on each measurement carrier and the at least one SMTC configuration is determined.

At step 203a, an activated state or a deactivated state of an SMTC configuration is determined.

At step 204a, a cell to be measured corresponding to the SMTC configuration is measured in the activated state of the SMTC configuration.

Detailed introductions of the step 201a to the step 204a may refer to the description of above embodiments, which are not elaborated in embodiments of the disclosure.

With the beam measurement method according to embodiments of the disclosure, the UE may obtain the at least one SMTC configuration corresponding to each measurement carrier sent by the network side device, determine the correspondence between each cell to be measured on each measurement carrier and the at least one SMTC configuration, and measure, in the activated state of the SMTC configuration, the cell to be measured corresponding to the SMTC configuration. It may be seen that in embodiments of the disclosure, different cells to be measured on the same measurement carrier are configured with respective SMTC configurations and different SMTC configurations may be activated at different time points to achieve the measurement of different cells to be measured at different time points. Based on this, when transmission delay differences of satellites corresponding to different cells to be measured are different, each cell to be measured may be activated at the corresponding time point based on the transmission delay difference of each satellite, thereby achieving successful measurement of each cell to be measured and solving the problem that "in the NTN system, different neighbor cells to be measured on the same measurement carrier cannot be measured due to different transmission delay differences of corresponding satellites".

FIG. 2B is a flowchart illustrating a measurement method according to embodiments of the disclosure. The method is performed by the UE. As illustrated in FIG. 2B, the measurement method may include the following.

At step 201b, a capability indication is sent to the network side device.

In one embodiment of the disclosure, the capability indication may include at least one of the following:
a maximum number X of SMTC configurations supported by the UE on a same measurement carrier, where X is a positive integer; or
a maximum number Y of SMTC configurations supported by the UE among all measurement carriers, where Y is a positive integer.

In one embodiment of the disclosure, X may be for example the number of cells to be measured on a same measurement carrier. Y may be the number of cells to be measured among all measurement carriers.

At step 202b, the at least one SMTC configuration corresponding to each measurement carrier sent by the network side device is obtained.

In one embodiment of the disclosure, the number of SMTC configurations corresponding to each measurement carrier may be greater than X. In another embodiment of the disclosure, the number of SMTC configurations corresponding to each measurement carrier may be less than or equal to X.

And, in one embodiment of the disclosure, the number of SMTC configurations corresponding to each measurement carrier may be greater than Y In another embodiment of the disclosure, the number of SMTC configurations corresponding to each measurement carrier may be less than or equal to Y

At step 203b, the correspondence between each cell to be measured on each measurement carrier and the at least one SMTC configuration is determined.

In one embodiment of the disclosure, each cell to be measured corresponds to a respective SMTC configuration.

Based on this, in one embodiment of the disclosure, if the number of SMTC configurations corresponding to a certain measurement carrier in the step 202b is greater than X or greater than Y, only a part of the SMTC configurations corresponding to the measurement carrier corresponds to the cells to be measured one by one, while the remaining SMTC configurations do not correspond to any cell to be measured (i.e., the remaining SMTC configurations are not used for measuring the cells).

For example, in one embodiment of the disclosure, it is assumed that there are two cells to be measured on a certain measurement carrier, namely the cell 1 to be measured and the cell 2 to be measured respectively. And, the measurement carrier corresponds to four SMTC configurations, namely SMTC#1, SMTC#2, SMTC#3, and SMTC#4. Based on this, in the four SMTC configurations, SMTC#1 may correspond to the cell 1 to be measured and SMTC#2 may correspond to the cell 2 to be measured, while SMTC#3 and SMTC#4 do not correspond to any cell to be measured, i.e., SMTC#3 and SMTC#4 are not used for measuring the cells within the carrier.

At step 204b, the cell to be measured corresponding to the SMTC configuration is measured in the activated state of the SMTC configuration.

A detailed introduction of the step 204b may refer to the description of above embodiments, which is not elaborated in embodiments of the disclosure.

With the beam measurement method according to embodiments of the disclosure, the UE may obtain the at least one SMTC configuration corresponding to each measurement carrier sent by the network side device, determine the correspondence between each cell to be measured on each measurement carrier and the at least one SMTC configuration, and measure, in the activated state of the SMTC configuration, the cell to be measured corresponding to the SMTC configuration. It may be seen that in embodiments of the disclosure, different cells to be measured on the same measurement carrier are configured with respective SMTC configurations and different SMTC configurations may be activated at different time points to achieve the measurement of different cells to be measured at different time points. Based on this, when transmission delay differences of satellites corresponding to different cells to be measured are different, each cell to be measured may be activated at the corresponding time point based on the transmission delay difference of each satellite, thereby achieving successful measurement of each cell to be measured and solving the problem that "in the NTN system, different neighbor cells to be measured on the same measurement carrier cannot be measured due to different transmission delay differences of corresponding satellites".

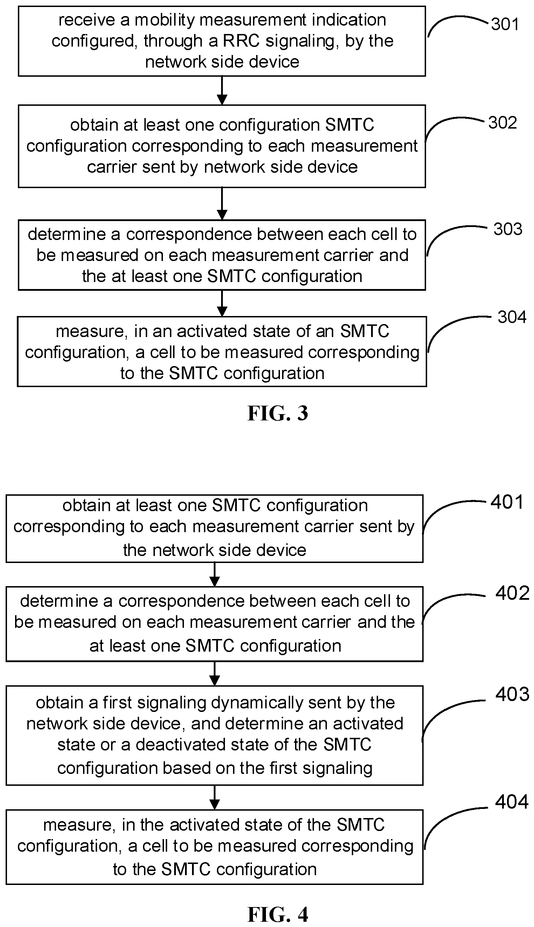

FIG. 3 is a flowchart illustrating a measurement method according to embodiments of the disclosure. The method is performed by the UE. As illustrated in FIG. 3, the measurement method may include the following.

At step 301, a mobility measurement indication configured, through a Radio Resource Control (RRC) signaling, by the network side device is received.

In one embodiment of the disclosure, the mobility measurement indication may be configured to instruct the UE to execute a mobility measurement process.

At step 302, the at least one configuration SMTC configuration corresponding to each measurement carrier sent by the network side device is obtained.

At step 303, the correspondence between each cell to be measured on each measurement carrier and the at least one SMTC configuration is determined.

At step 304, the cell to be measured corresponding to the SMTC configuration is measured in the activated state of the SMTC configuration.

Other introductions about the step 302 to the step 304 may refer to the description of above embodiments, which are not elaborated in embodiments of the disclosure.

With the beam measurement method according to embodiments of the disclosure, the UE may obtain the at least one SMTC configuration corresponding to each measurement carrier sent by the network side device, determine the correspondence between each cell to be measured on each measurement carrier and the at least one SMTC configuration, and measure, in the activated state of the SMTC configuration, the cell to be measured corresponding to the SMTC configuration. It may be seen that in embodiments of the disclosure, different cells to be measured on the same measurement carrier are configured with respective SMTC configurations, and different SMTC configurations may be activated at different time points to achieve the measurement of different cells to be measured at different time points. Based on this, when transmission delay differences of satellites corresponding to different cells to be measured are different, each cell to be measured may be activated at the corresponding time point based on the transmission delay difference of each satellite, thereby achieving successful measurement of each cell to be measured and solving the problem that "in the NTN system, different neighbor cells to be measured on the same measurement carrier cannot be measured due to different transmission delay differences of corresponding satellites".

FIG. 4 is a flowchart illustrating a measurement method according to embodiments of the disclosure. The method is performed by the UE. As illustrated in FIG. 4, the measurement method may include the following.

At step 401, the at least one SMTC configuration corresponding to each measurement carrier sent by the network side device is obtained.

At step 402, the correspondence between each cell to be measured on each measurement carrier and the at least one SMTC configuration is determined.

At step 403, a first signaling dynamically sent by the network side device is obtained, and the activated state or the deactivated state of the SMTC configuration is determined based on the first signaling.

In one embodiment of the disclosure, the first signaling may be used for activating or deactivating the SMTC configuration(s) on at least one measurement carrier.

In one embodiment of the disclosure, the first signaling may include at least one of the following:
a RRC signaling;
a Medium Access Control (MAC) signaling; or
a Downlink Control Information (DCI) signaling.

In one embodiment of the disclosure, the network side device dynamically sends the first signaling to the UE at different time points to indicate the activated state for the SMTC configuration at different time points.

For example, in one embodiment of the disclosure, it is assumed that on the measurement carrier CC1, there are four cells to be measured, namely, a cell 1 to be measured, a cell 2 to be measured, a cell 3 to be measured, and a cell 4 to be measured, and the CC1 corresponds to SMTC#1, SMTC#2, SMTC#3, and SMTC#4. The cell 1 to be measured on the CC1 corresponds to the SMTC#1 of the CC1, the cell 2 to be measured on the CC1 corresponds to the SMTC#2 of the CC1, the cell 3 to be measured on the CC1 corresponds to the SMTC#3 of the CC1, and the cell 4 to be measured on the CC1 corresponds to the SMTC#4 of the CC1. And, on the measurement carrier CC2, there are two cells to be measured, namely a cell 1 to be measured and a cell 2 to be measured, and the CC2 corresponds to SMTC#1 and SMTC#2. The cell 1 to be measured ion the CC2 corresponds to the SMTC#1 of the CC2, and the cell 2 to be measured on the CC2 corresponds to the SMTC#2 of the CC2.

Based on this, in one embodiment of the disclosure, at a time point T1, it is possible to activate the SMTC#1 and the SMTC#3 of CC1, deactivate the SMTC#2 and the SMTC#4 of the CC1, activate the SMTC#1 of the CC2, and deactivate the SMTC#2 of the CC2. At a time point T2, it is possible to activate the SMTC#2 and the SMTC#3 of the CC1, deactivate the SMTC#1 or the SMTC#4 of the CC1, activate the SMTC#2 of the CC2, and deactivate the SMTC#1 of the CC2.

The above introduction on when to indicate the SMTC configuration to be in the activated state and when to indicate the SMTC configuration to be in the deactivated state by the network side device may refer to the description of above embodiments, which is not elaborated in embodiments of the disclosure.

At step 404, the cell to be measured corresponding to the SMTC configuration is measured in the activated state of the SMTC configuration.

In one embodiment of the disclosure, when an SMTC configuration is in the activated state, the cell to be measured corresponding to the SMTC configuration is measured. When an SMTC configuration is in the inactivated state, the cell to be measured corresponding to the SMTC configuration is not measured.

For example, in one embodiment of the disclosure, based on the above content, the UE may measure the cell 1 to be measured and the cell 3 to be measure respectively corresponding to the SMTC#1 and the SMTC#3 in the activated state on the CC1 at the time point T1, and not measure the cell 2 to be measured and the cell 4 to be measured respectively corresponding to the SMTC#2 and the SMTC#4 in the deactivated state on the CC1. Similarly, the measurement may be performed on the cell to be measured corresponding to the SMTC configuration based on the activated state of the SMTC configuration.

With the beam measurement method according to embodiments of the disclosure, the UE may obtain the at least one SMTC configuration corresponding to each measurement carrier sent by the network side device, and determine the correspondence between each cell to be measured on each measurement carrier and the at least one SMTC configuration, and measure, in the activated state of the SMTC configuration, the cell to be measured corresponding to the SMTC configuration. It may be seen that in embodiments of the disclosure, different cells to be measured on the same measurement carrier are configured with respective SMTC configurations and different SMTC configurations may be activated at different time points to achieve the measurement of different cells to be measured at different time points. Based on this, when transmission delay differences of satellites corresponding to different cells to be measured are different, each cell to be measured may be activated at the corresponding time point based on the transmission delay difference of each satellite, thereby achieving successful measurement of each cell to be measured and solving the problem that "in the NTN system, different neighbor cells to be measured on the same measurement carrier cannot be measured due to different transmission delay differences of corresponding satellites".

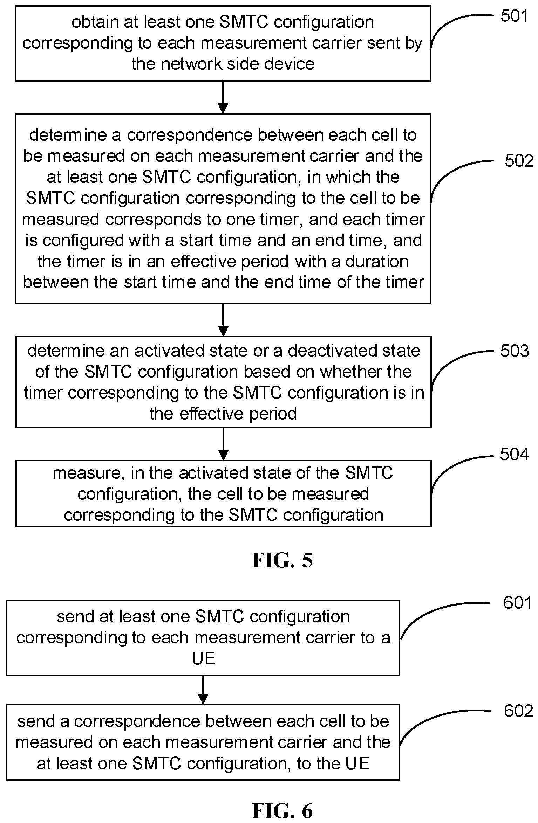

FIG. 5 is a flowchart illustrating a measurement method according to embodiments of the disclosure. The method is performed by the UE. As illustrated in FIG. 5, the measurement method may include the following.

At step 501, the at least one SMTC configuration corresponding to each measurement carrier sent by the network side device is received.

At step 502, the correspondence between each cell to be measured on each measurement carrier and the at least one SMTC configuration is determined, where the SMTC configuration corresponding to the cell to be measured corresponds to one timer, and each timer is configured with a start time and an end time. Between the start time and the end time of the timer, the timer is in an effective period.

It is noteworthy that in one embodiment of the disclosure, a criteria of determining the start time and the end time for the aforementioned timer is that: within a duration between the start time and the end time of the timer, the reference signal may be received within the cell to be measured corresponding to the SMTC configuration corresponding to the timer, and outside the duration between the start time and the end time of the timer, no reference signal can be received within the cell to be measured corresponding to the SMTC configuration corresponding to the timer.

At step 503, the activated state or the deactivated state of the SMTC configuration is determined based on whether the timer corresponding to the SMTC configuration is in the effective period.

In one embodiment of the present disclosure, determining the activated state or the deactivated state of the SMTC configuration based on whether the timer corresponding to the SMTC configuration is in the effective period may include:
determining that the SMTC configuration is in the activated state in response to the timer corresponding to the SMTC configuration being in the effective period; or
determining that the SMTC configuration is in the deactivated state in response to the timer corresponding to the SMTC configuration not being in the effective period.

At step 504, the cell to be measured corresponding to the SMTC configuration is measured in the activated state of the SMTC configuration.

The detailed introduction of the step 501 to the step 504 may refer to the description of above embodiments, which is not elaborated in embodiments of the disclosure.

With the beam measurement method according to embodiments of the disclosure, the UE may obtain the at least one SMTC configuration corresponding to each measurement carrier sent by the network side device, determine the correspondence between each cell to be measured on each measurement carrier and the at least one SMTC configuration, and measure, in the activated state of the SMTC configuration, the cell to be measured corresponding to the SMTC configuration. It may be seen that in embodiments of the disclosure, different cells to be measured on the same measurement carrier are configured with respective SMTC configurations, and different SMTC configurations may be activated at different time points to achieve the measurement of different cells to be measured at different time points. Based on this, when transmission delay differences of satellites corresponding to different cells to be measured are different, each cell to be measured may be activated at the corresponding time point based on the transmission delay difference of each satellite, thereby achieving successful measurement of each cell to be measured and solving the problem that "in the NTN system, different neighbor cells to be measured on the same measurement carrier cannot be measured due to different transmission delay differences of corresponding satellites".

FIG. 6 is a flowchart illustrating a measurement method according to embodiments of the disclosure. The method is performed by a network side device. As illustrated in FIG. 6, the measurement method may include the following.

At step 601, at least one SMTC configuration corresponding to each measurement carrier is sent to the UE.

At step 602, a correspondence between each cell to be measured on each measurement carrier and the at least one SMTC configuration is sent to the UE.

In one embodiment of the disclosure, the SMTC configurations corresponding to different cells to be measured are the same.

Furthermore, in one embodiment of the disclosure, the SMTC configurations corresponding to different cells to be measured are different.

Introductions about the step 601 to the step 602 may refer to the description of above embodiments, which are not elaborated in embodiments of the disclosure.

With the beam measurement method according to embodiments of the disclosure, the UE may obtain the at least one SMTC configuration corresponding to each measurement carrier sent by the network side device, determine the correspondence between each cell to be measured on each measurement carrier and the at least one SMTC configuration, and measure, in the activated state of the SMTC configuration, the cell to be measured corresponding to the SMTC configuration. It may be seen that in embodiments of the disclosure, different cells to be measured on the same measurement carrier are configured with respective SMTC configurations, and different SMTC configurations may be activated at different time points to achieve the measurement of different cells to be measured at different time points. Based on this, when transmission delay differences of satellites corresponding to different cells to be measured are different, each cell to be measured may be activated at the corresponding time point based on the transmission delay difference of each satellite, thereby achieving successful measurement of each cell to be measured and solving the problem that "in the NTN system, different neighbor cells to be measured on the same measurement carrier cannot be measured due to different transmission delay differences of corresponding satellites".

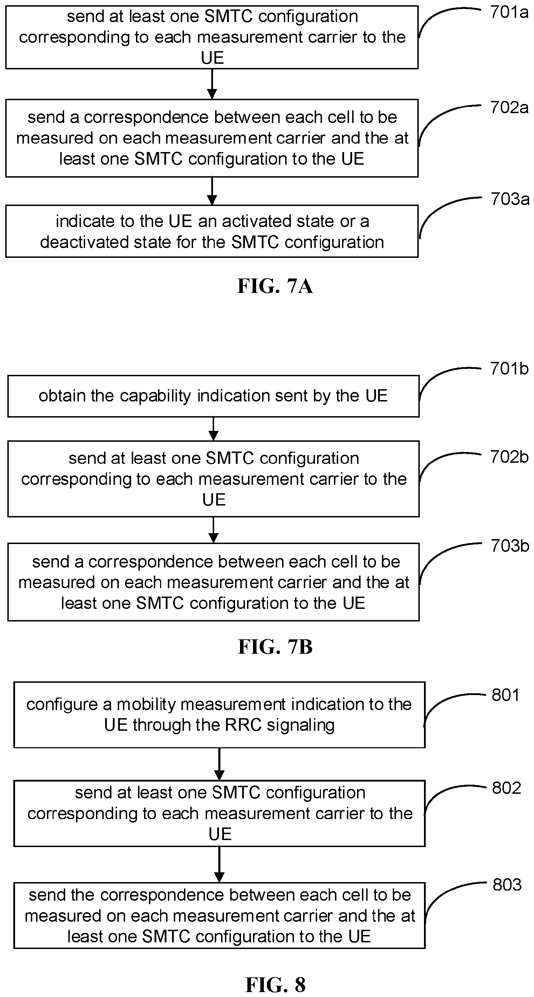

FIG. 7A is a flowchart illustrating a measurement method according to embodiments of the disclosure. The method is performed the network side device. As illustrated in FIG. 7A, the measurement method may include the following.

At step 701a, the at least one SMTC configuration corresponding to each measurement carrier is sent to the UE.

At step 702a, the correspondence between each cell to be measured on each measurement carrier and the at least one SMTC configuration is sent to the UE.

At step 703a, the activated state or the deactivated state for the SMTC configuration is indicated to the UE.

In one embodiment of the disclosure, the UE is able to obtain the measurement signal of the cell to be measured corresponding to the SMTC configuration in response to the SMTC configuration being in the activated state.

Introductions about the step 701a to thee step 703a may refer to the description of above embodiments, which are not elaborated in embodiments of the disclosure.

With the beam measurement method according to embodiments of the disclosure, the UE may obtain the at least one SMTC configuration corresponding to each measurement carrier sent by the network side device, determine the correspondence between each cell to be measured on each measurement carrier and the at least one SMTC configuration, and measure, in the activated state of the SMTC configuration, the cell to be measured corresponding to the SMTC configuration. It may be seen that in embodiments of the disclosure, different cells to be measured on the same measurement carrier are configured with respective SMTC configurations, and different SMTC configurations may be activated at different time points to achieve the measurement of different cells to be measured at different time points. Based on this, when transmission delay differences of satellites corresponding to different cells to be measured are different, each cell to be measured may be activated at the corresponding time point based on the transmission delay difference of each satellite, thereby achieving successful measurement of each cell to be measured and solving the problem that "in the NTN system, different neighbor cells to be measured on the same measurement carrier cannot be measured due to different transmission delay differences of corresponding satellites".

FIG.7B is a flowchart illustrating a measurement method according to embodiments of the disclosure. The method is performed by the network side device. As illustrated in FIG. 7B, the measurement method may include the following.

At step 701b, a capability indication sent by the UE is received.

In one embodiment of the disclosure, the capability indication may include at least one of the following:
a maximum number of SMTC configurations supported by the UE on a same measurement carrier; or
a maximum number of SMTC configurations supported by the UE among all measurement carriers.

At step 702b, at least one SMTC configuration corresponding to each measurement carrier is sent to the UE.

At step 703b, the correspondence between each cell to be measured on each measurement carrier and the at least one SMTC configuration is sent to the UE.

Introductions about the step 701b to the step 703b may refer to the description of above embodiments, which are not elaborated in embodiments of the disclosure.

With the beam measurement method according to embodiments of the disclosure, the UE may obtain the at least one SMTC configuration corresponding to each measurement carrier sent by the network side device, determine the correspondence between each cell to be measured on each measurement carrier and the at least one SMTC configuration, and measure, in the activated state of the SMTC configuration, the cell to be measured corresponding to the SMTC configuration. It may be seen that in embodiments of the disclosure, different cells to be measured on the same measurement carrier are configured with respective SMTC configurations, and different SMTC configurations may be activated at different time points to achieve the measurement of different cells to be measured at different time points. Based on this, when transmission delay differences of satellites corresponding to different cells to be measured are different, each cell to be measured may be activated at the corresponding time point based on the transmission delay difference of each satellite, thereby achieving successful measurement of each cell to be measured and solving the problem that "in the NTN system, different neighbor cells to be measured on the same measurement carrier cannot be measured due to different transmission delay differences of corresponding satellites".

FIG. 8 is a flowchart illustrating a measurement method according to embodiments of the disclosure. The method is performed by the network side device. As illustrated in FIG. 8, the measurement method may include the following.

At step 801, a mobility measurement indication is configured to the UE through an RRC signaling.

At step 802, the at least one SMTC configuration corresponding to each measurement carrier is sent to the UE.

At step 803, the correspondence between each cell to be measured on each measurement carrier and the at least one SMTC configuration is sent to the UE.

Introductions about the step 801 to the step 803 may refer to the description of above embodiments, which are not elaborated in embodiments of the disclosure.

With the beam measurement method according to embodiments of the disclosure, the UE may obtain the at least one SMTC configuration corresponding to each measurement carrier sent by the network side device, determine the correspondence between each cell to be measured on each measurement carrier and the at least one SMTC configuration, and measure, in the activated state of the SMTC configuration, the cell to be measured corresponding to the SMTC configuration. It may be seen that in embodiments of the disclosure, different cells to be measured on the same measurement carrier are configured with respective SMTC configurations, and different SMTC configurations may be activated at different time points to achieve the measurement of different cells to be measured at different time points. Based on this, when transmission delay differences of satellites corresponding to different cells to be measured are different, each cell to be measured may be activated at the corresponding time point based on the transmission delay difference of each satellite, thereby achieving successful measurement of each cell to be measured and solving the problem that "in the NTN system, different neighbor cells to be measured on the same measurement carrier cannot be measured due to different transmission delay differences of corresponding satellites".

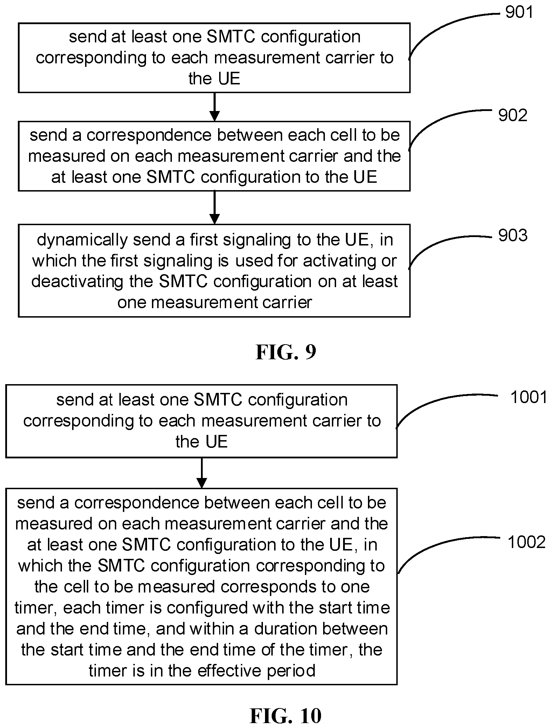

FIG. 9 is a flowchart illustrating a measurement method according to embodiments of the disclosure. The method is performed by a network side device. As illustrated in FIG. 9, the measurement method may include the following.

At step 901, at least one SMTC configuration corresponding to each measurement carrier is sent to the UE.

At step 902, the correspondence between each cell to be measured on each measurement carrier and the at least one SMTC configuration is sent to the UE.

At step 903, a first signaling is dynamically sent to the UE, in which the first signaling is used for activating or deactivating the SMTC configuration on at least one measurement carrier.

In one embodiment of the disclosure, the first signaling may include at least one of the following:
a RRC signaling;
a MAC signaling; or
a DCI signaling.

Introductions about the step 901 to the step 903 may refer to the description of above embodiments, which are not elaborated in embodiments of the disclosure.

With the beam measurement method according to embodiments of the disclosure, the UE may obtain the at least one SMTC configuration corresponding to each measurement carrier sent by the network side device, determine the correspondence between each cell to be measured on each measurement carrier and the at least one SMTC configuration, and measure, in the activated state of the SMTC configuration, the cell to be measured corresponding to the SMTC configuration. It may be seen that in embodiments of the disclosure, different cells to be measured on the same measurement carrier are configured with respective SMTC configurations, and different SMTC configurations may be activated at different time points to achieve the measurement of different cells to be measured at different time points. Based on this, when transmission delay differences of satellites corresponding to different cells to be measured are different, each cell to be measured may be activated at the corresponding time point based on the transmission delay difference of each satellite, thereby achieving successful measurement of each cell to be measured and solving the problem that "in the NTN system, different neighbor cells to be measured on the same measurement carrier cannot be measured due to different transmission delay differences of corresponding satellites".

FIG. 10 is a flowchart illustrating a measurement method according to embodiments of the disclosure. The method is performed by the network side device. As illustrated in FIG. 10, the measurement method may include the following.

At step 1001, at least one SMTC configuration corresponding to each measurement carrier is sent to the UE.

At step 1002, the correspondence between each cell to be measured on each measurement carrier and the at least one SMTC configuration is sent to the UE, in which the SMTC configuration corresponding to the cell to be measured corresponds to one timer, each timer is configured with the start time and the end time, and within a duration between the start time and the end time of the timer, the timer is in the effective period.

In one embodiment of the disclosure, an SMTC configuration corresponds to one timer, and each timer is configured with the start time and the end time. With the duration between the start time and the end time of the timer, the timer is in the effective period.

With the beam measurement method according to embodiments of the disclosure, the UE may obtain the at least one SMTC configuration corresponding to each measurement carrier sent by the network side device, determine the correspondence between each cell to be measured on each measurement carrier and the at least one SMTC configuration, and measure, in the activated state of the SMTC configuration, the cell to be measured corresponding to the SMTC configuration. It may be seen that in embodiments of the disclosure, different cells to be measured on the same measurement carrier are configured with respective SMTC configurations, and different SMTC configurations may be activated at different time points to achieve the measurement of different cells to be measured at different time points. Based on this, when transmission delay differences of satellites corresponding to different cells to be measured are different, each cell to be measured can be activated at the corresponding time point based on the transmission delay difference of each satellite, thereby achieving successful measurement of each cell to be measured and solving the problem that "in the NTN system, different neighbor cells to be measured on the same measurement carrier cannot be measured due to different transmission delay differences of corresponding satellites".

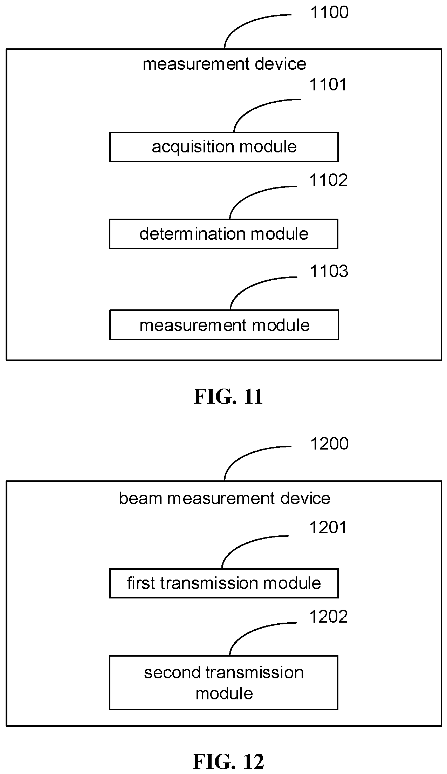

FIG. 11 is a schematic diagram illustrating a measurement device according to embodiments of the disclosure. The device is configured in the UE. As illustrated in FIG. 11, the measurement device may include an acquisition module, a determination module and a measurement module.

The acquisition module is configured to obtain at least one SMTC configuration corresponding to each measurement carrier sent by the network side device.

The determination module is configured to determine a correspondence between each cell to be measured on each measurement carrier and the at least one SMTC configuration.

The measurement module is configured to measure, in an activated state of an SMTC configuration, a cell to be measured corresponding to the SMTC configuration.

With the beam measurement device according to embodiments of the disclosure, the UE may obtain the at least one SMTC configuration corresponding to each measurement carrier sent by the network side device, determine the correspondence between each cell to be measured on each measurement carrier and the at least one SMTC configuration, and measure, in the activated state of the SMTC configuration, the cell to be measured corresponding to the SMTC configuration. It may be seen that in embodiments of the disclosure, different cells to be measured on the same measurement carrier are configured with respective SMTC configurations, and different SMTC configurations may be activated at different time points to achieve the measurement of different cells to be measured at different time points. Based on this, when transmission delay differences of satellites corresponding to different cells to be measured are different, each cell to be measured may be activated at the corresponding time point based on the transmission delay difference of each satellite, thereby achieving successful measurement of each cell to be measured and solving the problem that "in the NTN system, different neighbor cells to be measured on the same measurement carrier cannot be measured due to different transmission delay differences of corresponding satellites".

In one embodiment of the disclosure, the device is further configured to:
determine an activated state or a deactivated state of the SMTC configuration.

In one embodiment of the disclosure, the device is further configured to:
send a capability indication to the network side device, in which the capability indication includes at least one of the following:
a maximum number of SMTC configurations supported by the UE on a same measurement carrier; or
a maximum number of SMTC configurations supported by the UE among all measurement carriers.

In one embodiment of the disclosure, the device is further configured to:
receive the mobility measurement indication configured, through a RRC signaling, by the network side device.

In one embodiment of the disclosure, SMTC configurations corresponding to different cells to be measured are the same.

In one embodiment of the disclosure, SMTC configurations corresponding to different cells to be measured are different.

In some embodiments, in one embodiment of the disclosure, the device is further configured to:
obtain a first signaling dynamically sent by the network side device, and determine the activated state or the deactivated state of the SMTC configuration based on the first signaling; in which the first signaling is used for activating or deactivating the SMTC configuration on at least one measurement carrier.

In one embodiment of the disclosure, the first signaling includes at least one of the following:
an RRC signaling;
a MAC signaling; or
a DCI signaling.

In one embodiment of the disclosure, the SMTC configuration corresponds to one timer, each timer configured with the start time and the end time. With a duration between the start time and the end time of the timer, the timer is in the effective period.

In one embodiment of the disclosure, the determination module is further configured to:
determine the activated state or the deactivated state of the SMTC configuration based on whether the timer corresponding to the SMTC configuration is in the effective period.

In one embodiment of the disclosure, the determination module is further configured to:
determine that the SMTC configuration is in the activated state in response to the timer corresponding to the SMTC configuration being in the effective period; or
determine that the SMTC configuration is in the deactivated state in response to the timer corresponding to the SMTC configuration not being in the effective period.

In one embodiment of the disclosure, the UE is able to successfully obtain the measurement signal of the cell to be measured corresponding to the SMTC configuration in response to the SMTC configuration being in the activated state.

FIG. 12 is a schematic diagram illustrating a measurement device according to embodiments of the disclosure. The device is configured in the network side device. As illustrated in FIG. 12, the measurement device may include a first transmission module and a second transmission module.

The first transmission module is configured to send at least one SMTC configuration corresponding to each measurement carrier to the UE.

The second transmission module is configured to send a correspondence between each cell to be measured on each measurement carrier and the at least one SMTC configuration to the UE.

With the beam measurement device according to embodiments of the disclosure, the UE may obtain the at least one SMTC configuration corresponding to each measurement carrier sent by the network side device, determine the correspondence between each cell to be measured on each measurement carrier and the at least one SMTC configuration, and measure, in the activated state of the SMTC configuration, the cell to be measured corresponding to the SMTC configuration. It may be seen that in embodiments of the disclosure, different cells to be measured on the same measurement carrier are configured with respective SMTC configurations, and different SMTC configurations will be activated at different time points to achieve the measurement of different cells to be measured at different time points. Based on this, when transmission delay differences of satellites corresponding to different cells to be measured are different, each cell to be measured may be activated at the corresponding time point based on the transmission delay difference of each satellite, thereby achieving successful measurement of each cell to be measured and solving the problem that "in the NTN system, different neighbor cells to be measured on the same measurement carrier cannot be measured due to different transmission delay differences of corresponding satellites".

In one embodiment of the disclosure, the device is further configured to:
indicate to the UE an activated state or a deactivated state for the SMTC configuration.

In one embodiment of the disclosure, the device is further configured to:
obtain a capability indication sent by the UE; in which the capability indication includes at least one of the following:
a maximum number of SMTC configurations supported by the UE on a same measurement carrier; and
a maximum number of SMTC configurations supported by the UE among all measurement carriers.

In one embodiment of the disclosure, the device is further configured to:
configure a mobility measurement indication to the UE through a RRC signaling.

In one embodiment of the disclosure, SMTC configurations corresponding to different cells to be measured are the same.

In one embodiment of the disclosure, SMTC configurations corresponding to different cells to be measured are different.

In one embodiment of the disclosure, the indication module is further configured to:
dynamically send a first signaling to the UE, in which the first signaling is used for activating or deactivating the SMTC configuration on at least one measurement carrier.

In one embodiment of the disclosure, the first signaling includes at least one of the following:
an RRC signaling;
a MAC signaling; or
a DCI signaling.

In one embodiment of the disclosure, the SMTC configuration corresponds to one timer, and each timer is configured with the start time and the end time. Within a duration between the start time and the end time of the timer, the timer is in the effective period.

In one embodiment of the disclosure, the UE is able to obtain the measurement signal of the cell to be measured corresponding to the SMTC configuration in response to the SMTC configuration being in the activated state.

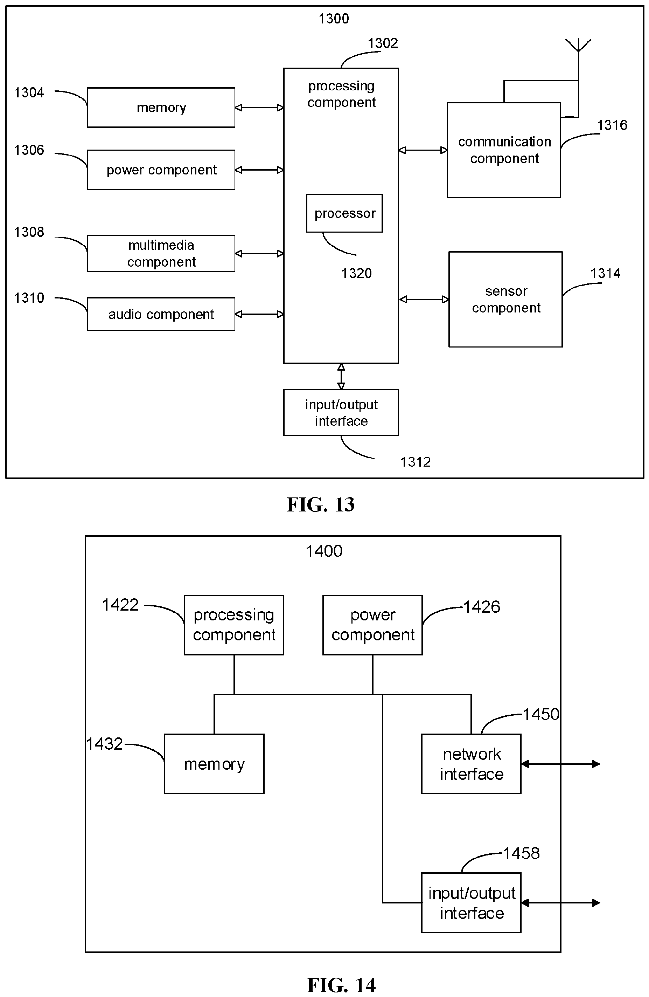

FIG. 13 is a block diagram illustrating a user equipment (UE) 1300 according to an embodiment of the disclosure. For example, the UE 1300 may be a mobile phone, a computer, a digital broadcasting terminal, a message sending and receiving apparatus, a game console, a tablet apparatus, a medical apparatus, a fitness apparatus, a personal digital assistant, etc.

As illustrated in FIG. 13, the UE 1300 may include one or more of following components: a processing component 1302, a memory 1304, a power component 1306, a multimedia component 1308, an audio component 1310, an input/output (I/O) interface 1312, a sensor component 1313 and a communication component 1316.

The processing component 1302 typically controls the overall operation of the UE 1300, such as operations associated with display, telephone calls, data communication, camera operations, and recording operations. The processing component 1302 may include one or more processors 1320 to execute instructions to complete all or part of the steps of the above methods. In addition, the processing component 1302 may include one or more modules to facilitate the interaction between the processing component 1302 and other components. For example, the processing component 1302 may include a multimedia module to facilitate interaction between the multimedia component 1308 and the processing component 1302.

The memory 1304 is configured to store various types of data to support operations on the UE 1300. Examples of these data include instructions for any application program or method operated on the UE 1300, contact data, phone book data, messages, images, videos, etc. The memory 1304 may be implemented by any type of volatile or non-volatile storage apparatus or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disc.

The power component 1306 provides power to various components of the UE1300. The power component 1306 may include a power management system, at least one power supply, and other components associated with generating, managing, and distributing power for the UE 1300.

The multimedia component 1308 includes a screen providing an output interface between the UE 1300 and a user. In some embodiments, the screen may include a liquid crystal display (LCD) and a touch panel (TP). If the screen includes the touch panel, the screen may be implemented as a touch screen to receive input signals from the user. The touch panel includes at least one touch sensor to sense touches, slides and gestures on the touch panel. The touch sensor may not only sense the boundaries of the touch or slide action, but also detect the wake-up time and pressure associated with the touch or slide operation. In some embodiments, the multimedia component 1308 includes a front-facing camera and/or a rear-facing camera. The front-facing camera and/or the rear-facing camera may receive external multimedia data when the UE 1300 is in an operating mode, such as a shooting mode or a video mode. Each front-facing camera and rear-facing camera may be a fixed optical lens system or have a focal length and an optical zoom capability.

The audio component 1310 is configured to output and/or input audio signals. For example, the audio component 1310 includes a microphone (MIC) that is configured to receive external audio signals when the UE 1300 is in the operating mode, such as a call mode, a recording mode, and a speech recognition mode. The received audio signals may be further stored in the memory 1304 or transmitted through the communication component 1316. In some embodiments, the audio component 1310 further includes a speaker for outputting the audio signals.

The Input/output (I/O) interface 1312 provides an interface between the processing component 1302 and a peripheral interface module. The peripheral interface module may be a keypad, a click wheel, a button, and the like. These buttons may include, but are not limited to, a home button, a volume button, a start button, and a lock button.

The sensor component 1313 includes at least one sensor for providing state assessments of various aspects for the UE 1300. For example, the sensor component 1313 may detect the on/off state of the UE 1300, the relative positioning of components, such as a display and a keypad of the UE 1300. The sensor component 1313 may also detect the position change of the UE 1300 or a component of the UE 1300, the presence or absence of user contact with the UE 1300, the orientation or acceleration/deceleration of the UE 1300 and the temperature change of the UE 1300. The sensor component 1313 may include a proximity sensor configured to detect the presence of a nearby object without any physical contact. The sensor component 1313 may also include an optical sensor, such as a CMOS or CCD image sensor, for use in imaging applications. In some embodiments, the sensor component 1313 may also include an acceleration sensor, a gyroscope sensor, a magnetic sensor, a pressure sensor, or a temperature sensor.

The communication component 1316 is configured to facilitate wired or wireless communication between the UE 1300 and other apparatuses. The UE 1300 may access to a wireless network based on a communication standard, such as Wi-Fi, 2G or 3G, or a combination thereof. In an embodiment, the communication component 1316 receives broadcast signals or broadcast-related information from an external broadcast management system via a broadcast channel. In an embodiment, the communication component 1316 further includes a near field communication (NFC) module to facilitate short range communication. For example, NFC modules may be implemented based on Radio Frequency Identification (RFID) technology, Infrared Data Association (IrDA) technology, Ultra Wide Band (UWB) technology, Bluetooth (BT) technology and other technologies.

In an embodiment, the UE 1300 may be implemented by at least one application specific integrated circuit (ASIC), digital signal processor (DSP), digital signal processing device (DSPD), programmable logic device (PLD), field programmable gate array (FPGA), controller, microcontroller, microprocessor, or another electronic element, for executing the above methods.

FIG. 14 is a block diagram illustrating a network side device 1400 according to embodiments of the disclosure. For example, the network side device 1400 may be provided as a network side device. As illustrated in FIG. 14, the network side device 1400 includes a processing component 1411, which further includes at least one processor, and a memory resource represented by a memory 1432, in which the memory resource is configured for storing instructions that can be executed by the processing component 1422, such as an application program. The application programs stored in the memory 1432 may include one or more modules, with each module corresponding to a set of instructions. In addition, the processing component 1410 is configured to execute instructions to execute any of aforementioned methods performed by the network side device, such as the method illustrated in FIG. 1A and FIG. 1B.

The network side device 1400 may also include a power component 1426 configured to execute power management of the network side device 1400, a wired or wireless network interface 1450 configured to connect the network side device 1400 to the network, and an input/output (I/O) interface 1458. The network side device 1400 may operate an operating system storage in the memory 1432, such as Windows Server TM, Mac OS XTM, Unix TM, Linux TM, Free BSDTM or similar.

In embodiments of the disclosure, the methods according to embodiments of the disclosure are introduced respectively from the perspective of the network side device and the UE. In order to achieve various functions of the methods according to above embodiments of the disclosure, the network side device and the UE may include a hardware structure and a software module, to achieve the above functions in a form of the hardware structure, the software module, or the hardware structure plus the software module. One of the above functions may be executed in the form of the hardware structure, the software module, or the hardware structure plus the software module.

In embodiments of the disclosure, the methods according to embodiments of the disclosure are introduced respectively from the perspective of the network side device and the UE. In order to achieve various functions of the methods according to embodiments of the disclosure, the network side device and the UE may include a hardware structure and a software module, to achieve the above functions in a form of the hardware structure, the software module, or the hardware structure plus the software module. One of the above functions may be executed in the form of the hardware structure, the software module, or the hardware structure plus the software module.

A communication device according to embodiments of the disclosure. The communication device may include a transceiver module and a processing module. The transceiver module may include a transmission module and/or a receiving module. The transmission module is configured to implement a transmission function, the receiving module is configured to implement a receiving function, and the transceiver module may implement the transmission function and/or the receiving function.

The communication device may be a terminal device (such as the terminal device in aforementioned method embodiments), a device within the terminal device, or a device that may be matched and used with the terminal device. Or, the communication device may be a network device, a device within a network device, or a device that may be matched and used with the network device.

According to another communication device according to embodiments of the disclosure, the communication device may be a network device, a terminal device (such as the terminal device in aforementioned method embodiments), or may be a chip, a chip system, or a processor that supports the network device to implement the above methods, or may be a chip, a chip system, or a processor that supports the terminal device to implement the above methods. This device may be configured to implement the methods described in the above method embodiments, as described in e above method embodiments.

The communication device may include one or more processors. The processor may be a general-purpose processor or a dedicated processor, etc. For example, the processor may be a baseband processor or a central processor. The baseband processor may be configured to process communication protocols and data, and the central processor may be configured to control the communication device (such as the network side device, a baseband chip, a terminal device, a terminal device chip, a DU or a CU. etc.), execute a computer program, and process data from the computer program.

In some embodiments, the communication device may also include one or more memories on which the computer program is stored, and the processor executes the computer program to enable the communication device to execute the methods described in above embodiments. In some embodiments, the memory may also store data. The communication device and the memory may be provided separately or integrated together.

In some embodiments, the communication device may also include a transceiver and an antenna. The transceiver may be referred to as a transceiver unit, a transceiver machine, or a transceiver circuit, etc., and the transceiver is configured to achieve a transceiver function. The transceiver may include a receiver and a transmitter, the receiver may be referred to as a receiver machine or a receiving circuit, etc., to achieve a receiving function, and the transmitter may be referred to as a transmitter machine or a transmission circuit, etc., to achieve a transmission function.

In some embodiments, the communication device may also include one or more interface circuits. The interface circuit is configured to receive code instructions and transmit the code instructions to the processor. The processor runs the code instructions to enable the communication device to execute the methods described in above method embodiments.

The communication device is the terminal device (such as the terminal device in aforementioned method embodiments). The processor is configured to execute any of the methods illustrated in FIGS. 1A to 4.

The communication device is the network device. The transceiver is configured to execute any of the methods illustrated in FIGS. 5 to 7B.

In one implementation, the processor may include the transceiver for implementing the receiving function and the transmission function. For example, the transceiver may be the transceiver circuit, an interface, or an interface circuit. The transceiver circuit, the interface, or the interface circuit configured to achieve the receiving function and the transmission function may be separate or integrated together. The above-mentioned transceiver circuit, the interface, or the interface circuit may be configured for reading and writing code/data, or the above-mentioned transceiver circuit, the interface, or the interface circuit may be configured for transmitting or transferring signals.

In one implementation, the processor may store the computer program. When the computer program runs on the processor, the communication device is caused to execute the methods described in above embodiments. The computer program may be embedded in the processor, in which case the processors may be implemented by a hardware.

In one implementation, the communication device may include a circuit that may achieve the functions of transmission, receiving, or communicating as described in aforementioned method embodiments. The processor and the transceiver described in the present disclosure may be implemented in an integrated circuit (IC), an analog IC, a RF integrated circuit (RFIC), a mixed signal IC, an application specific integrated circuit (ASIC), a printed circuit board (PCB), or an electronic device, etc. The processor and the transceiver may also be manufactured using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication device described in above embodiments may be the network device or the terminal device (such as the terminal device in aforementioned method embodiments), but the scope of the communication device described in the disclosure is not limited to this, and the structure of the communication device may be unrestricted. The communication device may be an independent device or part of a larger device. For example, the communication device may be:
(1) an independent IC, or a chip, or a chip system or a chip subsystem;
(2) a set of one or more ICs, for example, the set of IC may also include a storage component for storing data and a computer program;
(3) ASICs, such as a modem;
(4) a module that may be embedded in other equipment;
(5) a receiver machine, a terminal device, an intelligent terminal device, a cellular phone, a wireless device, a handheld machine, a mobile unit, a vehicle mounted machine, a network machine, a cloud device, an artificial intelligence machine, etc.; or
(6) others.

For the communication device that may be the chip or the chip system, the chip includes the processor and the interface. The number of processors may be one or more, and the number of interfaces may be multiple.

In some embodiments, the chip also includes the memory, in which the memory is configured to store necessary computer programs and data.

Those skilled in the art may also understand that various illustrative logical blocks and steps listed in embodiments of the disclosure may be implemented through electronic hardware, computer software, or a combination of both. Whether such function is implemented through hardware or software depends on a specific application and a design requirement of overall system. Those skilled in the art may use various methods to implement the described function for each specific application, but such implementation should not be understood as exceeding the scope protected by the disclosed embodiments.

Embodiments of the disclosure also provides a system for determining a duration of sidelink, in which the system includes the communication device as the terminal device (such as the first terminal device in aforementioned method embodiments) and the communication device as the network device in the aforementioned embodiments, or the system includes the communication device as the terminal device (such as the first terminal device in aforementioned method embodiments) and the communication device as the network device in aforementioned embodiments.

The disclosure also provides a readable storage medium having instructions stored thereon. When the instructions are executed, functions of any of above method embodiments are implemented.

The disclosure also provides a computer program product that, when executed by the computer, implements functions of any of above method embodiments.

Above embodiments may be fully or partially implemented through software, hardware, firmware, or any combination thereof. When implemented using software, embodiments may be fully or partially implemented in the form of computer program products. The computer program product includes one or more computer programs. When loading and executing the computer program on the computer, all or part of the processes or functions described in embodiments of the disclosure are generated. The computer may be a general-purpose computer, a specialized computer, a computer network, or other programmable devices. The computer program may be stored in a computer-readable storage medium or transmitted from one computer-readable storage medium to another. For example, the computer program may be transmitted from a website site, a computer, a server, or a data center via wired (such as a coaxial cable, an optical fiber, a digital subscriber line (DSL)) or wireless (such as infrared, wireless, microwave, etc.) methods to another website site, computer, server, or data center. The computer-readable storage medium may be any available medium that the computer may access, or a data storage device such as a server, a data center, etc. that integrates one or more available medium. The available medium may be a magnetic medium (such as a floppy disk, a hard disk, a magnetic tape), an optical medium (such as a high-density digital video discs (DVD)), or a semiconductor medium (such as a solid state disk (SSD)), etc.

Those skilled in the art may understand that first, second, and other numerical numbers involved in the disclosure are only for a convenience of description and differentiation, and are not used to limit the scope of embodiments of the disclosure, but also indicate an order.

The term "at least one" in the disclosure may also be described as one or a plurality of, and the term "a/the plurality of" may be two, three, four, or more, which is not limited in the disclosure. In embodiments of the disclosure, for a technical feature, technical features in the technical feature are distinguished by "first", "second", "third", "A", "B", "C", and "D", and there is no order or order of magnitude between the technical features described in "first", "second", "third", "A", "B", "C", and "D".

Other embodiments of the disclosure will easily occur to those skilled in the art after considering the specification and practicing the disclosure disclosed herein. The disclosure is intended to cover any variations, uses or adaptations of the disclosure, which follow the general principles of the disclosure and include common sense or common technical means in this technical field that are not disclosed in the disclosure. The specification and embodiments are only considered illustrative, and the true scope and spirit of the disclosure are indicated by the following claims.

It is understandable that the disclosure is not limited to the precise structures described above and shown in the drawings, and various modifications and changes can be made without departing from its scope. The scope of the disclosure is limited only by the scope of the appended claims.

## Claims

1. A measurement method, performed by a user equipment (UE), comprising:
obtaining at least one Synchronization Signal Block Measurement Timing configuration (SMTC) configuration corresponding to each measurement carrier sent by a network side device;
determining a correspondence between each cell to be measured on each measurement carrier and the at least one SMTC configuration; and
measuring, in an activated state of an SMTC configuration, a cell to be measured corresponding to the SMTC configuration.

2. The method of claim 1, further comprising:
determining the activated state or a deactivated state of the SMTC configuration.

3. The method of claim 1, further comprising:
sending a capability indication to the network side device, wherein the capability indication comprises at least one of:
a maximum number of SMTC configurations supported by the UE on a same measurement carrier; or
a maximum number of SMTC configurations supported by the UE among all measurement carriers.

4. The method of claim 1, further comprising:
receiving a mobility measurement indication configured, through a Radio Resource Control (RRC) signaling, by the network side device.

5. The method of claim 1, wherein SMTC configurations corresponding to different cells to be measured are the same.

6. The method of claim 1, wherein SMTC configurations corresponding to different cells to be measured are different.

7. The method of claim 2, wherein determining the activated state or the deactivated state of the SMTC configuration comprises:
obtaining a first signaling dynamically sent by the network side device, and determining the activated state or the deactivated state of the SMTC configuration based on the first signaling, wherein the first signaling is used for activating or deactivating the SMTC configuration on at least one measurement carrier.

8. The method of claim 7, wherein the first signaling comprises at least one of:
a Radio Resource Control (RRC) signaling;
a Medium Access Control (MAC) signaling; or
a Downlink Control Information (DCI) signaling.

9. The method of claim 2, wherein the SMTC configuration corresponds to one timer, each timer is configured with a start time and an end time, and the timer is in an effective period within a duration between the start time and the end time of the timer.

10. The method of claim 9, wherein determining the activated state or the deactivated state of the SMTC configuration comprises:
determining the activated state or the deactivated state of the SMTC configuration based on whether the timer corresponding to the SMTC configuration is in the effective period.

11. The method of claim 10, wherein determining the activated state or the deactivated state of the SMTC configuration based on whether the timer corresponding to the SMTC configuration is in the effective period comprises:
determining that the SMTC configuration is in the activated state in response to the timer corresponding to the SMTC configuration being in the effective period; or
determining that the SMTC configuration is in the deactivated state in response to the timer corresponding to the SMTC configuration not being in the effective period.

12. The method of claim 2, wherein the UE is able to obtain a measurement signal of the cell to be measured corresponding to the SMTC configuration in response to the SMTC configuration being in the activated state.

13. A measurement method, performed by a network side device, comprising:
sending at least one Synchronization Signal Block Measurement Timing configuration (SMTC) configuration corresponding to each measurement carrier to a user equipment (UE); and
sending a correspondence between each cell to be measured in each measurement carrier and the at least one SMTC configuration to the UE.

14. The method of claim 13, further comprising:
indicating, to the UE, an activated state or a deactivated state for the SMTC configuration.

15. The method of claim 14, further comprising:
obtaining a capability indication sent by the UE, wherein the capability indication comprises at least one of:
a maximum number of SMTC configurations supported by the UE on a same measurement carrier; or
a maximum number of SMTC configurations supported by the UE among all measurement carriers.

16. The method of claim 13, further comprising:
configuring a mobility measurement indication to the UE through a Radio Resource Control (RRC) signaling.

17. The method of claim 13, wherein SMTC configurations corresponding to different cells to be measured are the same.

18. The method of claim 13, wherein SMTC configurations corresponding to different cells to be measured are different.

19. The method of claim 14, wherein indicating, to the UE, the activated state or the deactivated state for the SMTC configuration comprises:
dynamically sending a first signaling to the UE, wherein the first signaling is used for activating or deactivating the SMTC configuration on at least one measurement carrier.

20. The method of claim 19, wherein the first signaling comprises at least one of:
a Radio Resource Control (RRC) signaling;
a Medium Access Control (MAC) signaling; or
a Downlink Control Information (DCI) signaling.

21. The method of claim 13, wherein the SMTC configuration corresponds to one timer, each timer is configured with a start time and an end time, and the timer is in an effective period within a duration between the start time and the end time of the timer.

22. The method of claim 14, wherein the UE is able to obtain a measurement signal of the cell to be measured corresponding to the SMTC configuration in response to the SMTC configuration being in the activated state.

23. A measurement device, configured in a user equipment (UE), comprising:
an acquisition module, configured to obtain at least one Synchronization Signal Block Measurement Timing Configuration (SMTC) configuration corresponding to each measurement carrier sent by a network side device;
a determination module, configured to determine a correspondence between each cell to be measured on each measurement carrier and the at least one SMTC configuration; and
a measurement module, configured to measure, in the activated state of the SMTC configuration, the cell to be measured corresponding to the SMTC configuration.

24. A measurement device, configured in a network side device, comprising:
a first transmission module, configured to send, at least one Synchronization Signal Block Measurement Timing Configuration (SMTC) configuration corresponding to each measurement carrier to a user equipment (UE); and
a second transmission module, configured to send a correspondence between each cell to be measured on each measurement carrier and the at least one SMTC configuration to the UE.

25. A communication device, comprising a processor and a memory, wherein a computer program is stored in the memory, and the processor executes the computer program stored in the memory to cause the device to perform the method of any one of claim 1 to claim 12.

26. A communication device, comprising a processor and a memory, wherein a computer program is stored in the memory, and the processor executes the computer program stored in the memory to cause the device to perform the method of any one of claim 13 to claim 22.

27. A communication device, comprising a processor and an interface circuit,
wherein the interface circuit is configured to receive code instructions and transmit the code instructions to the processor; and
the processor is configured to run the code instructions to perform the method of any one of claim 1 to claim 12.

28. A communication device, comprising a processor and an interface circuit,
wherein the interface circuit is configured to receive code instructions and transmit the code instructions to the processor; and
the processor is configured to run the code instruction to perform the method of any one of claim 13 to claim 22.

29. A computer-readable storage medium, having instructions stored thereon, wherein when the instructions are executed, the method of any one of claim 1 to claim 12 is performed.

30. A computer-readable storage medium, having instructions stored thereon, wherein when the instructions are executed, the method of any one of claim 13 to claim 22 is performed.
